# FASCICULE DE BREVET EUROPEEN

(11) **EP 3 487 667 B1**
(45) Date de publication et mention de la délivrance du brevet: **02.09.2020**
(21) Numéro de dépôt: 17748838.4
(22) Date de dépôt: 19.07.2017
(51) Int. Cl.: B25J 9/00, B25J 11/00, B25J 13/08, B25J 18/00

(54) **MACHINE-OUTIL D'USINAGE**
MASCHINENWERKZEUG
MACHINE TOOL

(30) Priorité: 21.07.2016 FR 1656971
(43) Date de publication de la demande: 29.05.2019
(73) Titulaire: Comau France, 78197 Trappes Cedex (FR)
(72) Inventeur: BASELGA, Vincent, 81570 Semalens (FR)
(74) Mandataire: Godard, Xavier
(86) Numéro de dépôt international: PCT/FR2017/051972
(87) Numéro de publication internationale: WO 2018/015662

(56) Documents cités:
- EP-A1- 2 460 624
- EP-A2- 0 109 687
- DE-U1-202013 103 409
- US-A- 4 606 696
- US-A- 4 706 004

## Description

### DOMAINE D'APPLICATION DE L'INVENTION

La présente invention a trait au domaine de l'usinage et notamment aux adaptations des structures cinématiques des machines-outils mettant en mouvement les outils afin de réaliser les usinages dans les meilleures conditions.

### DESCRIPTION DE L'ART ANTÉRIEUR

Il existe dans l'art antérieur des machines-outils d'usinage adoptant une structure cinématique à déplacement linéaire et en série telles celles mettant en mouvement une électro-broche porte-outil selon trois axes linéaires X, Y et Z.
Ainsi, par exemple, le document FR2743741 divulgue une machine-outil d'usinage à grande vitesse du type porte-broche dont le poste d'entraînement utilise une structure logique autorisant les déplacements d'un coulant porte-broche le long de trois axes. Cette structure logique du poste d'entraînement est constituée d'un bâti fixe se composant d'un châssis-support agencé dans un plan vertical. Ce châssis-support comprend une paire de rails horizontaux transversaux parallèles autorisant, selon un mouvement horizontal transversal classiquement le long d'un axe appelé axe X, un coulissement d'une table verticale formant un cadre support. Cette table verticale est bordée latéralement d'une deuxième paire de rails verticaux parallèles disposés perpendiculairement autorisant, selon un mouvement vertical classiquement le long d'un axe appelé axe Y, un coulissement d'une poupée. Cette poupée est traversée par un coulant porte-broche évoluant selon un mouvement horizontal longitudinal le long d'un axe dit axe Z normal aux axes précédents.

La mise en mouvement peut être réalisée par des moteurs-linéaires.

Venant en vis-à-vis de l'outil installé à l'extrémité de l'électro-broche, la pièce à usiner peut également être installée sur une structure porte-pièce proposant des axes pour des déplacements non seulement linéaires mais également rotatifs.

Une telle structure a pour avantage de proposer une large gamme d'usinages rapides et précis. Les moyens de mise en œuvre nécessaires à cette rapidité et à cette précision sur chaque axe de mouvement font qu'une machine-outil d'usinage à grande vitesse adoptant une telle structure requiert un budget important.
Le critère du coût devient d'autant plus important que l'usinage complet d'une pièce peut requérir son passage dans une pluralité de machines-outils. Le document DE 20 2013 103 409 U1 divulgue une machine-outil d'usinage comprenant une structure cinématique mettant en mouvement une électro-broche porteuse d'un outil de coupe tournant sur l'axe de l'électro-broche, ladite structure cinématique mettant en mouvement l'électro-broche selon un plan de positionnement perpendiculaire à l'axe de l'électro-broche, ladite structure cinématique comprenant une platine montée sur un module support et un robot comprenant un premier bras et un deuxième bras dont l'extrémité accueille l'électro-broche, lesdits bras étant munis de moyens d'entraînement en rotation autour d'axes parallèles à l'axe de l'électro-broche, lesdits moyens d'entraînement étant des moteurs à arbres tournants.

### DESCRIPTION DE L'INVENTION

La demanderesse a mené des recherches visant à proposer une machine-outil d'usinage à structure moins onéreuse proposant une majorité de la gamme des usinages réalisés par les structures classiques et respectant au mieux les exigences de précisions et de rapidité des usinages à grande vitesse.

Ces recherches ont abouti à la conception et à la réalisation d'une machine-outil d'usinage selon la revendication 1. Cette machine-outil d'usinage comprend une structure cinématique mettant en mouvement une électro-broche porteuse d'outil de coupe, lequel outil de coupe étant tournant sur l'axe de l'électro-broche, la structure cinématique mettant en mouvement l'électro-broche selon un plan de positionnement perpendiculaire à l'axe de l'électro-broche,
la machine-outil comprenant un module support de pièce à usiner. De plus, ladite structure cinématique positionne l'électro-broche dans le plan de positionnement et est une structure articulée comprenant deux bras articulés :
- un premier bras comprenant deux extrémités, une première extrémité du premier bras étant montée pivotante par rapport à une platine selon un seul axe de rotation parallèle à l'axe de l'électro-broche, un premier moyen d'entraînement en rotation comprenant un moteur à arbre tournant et assurant la mise en mouvement autour de cet axe,
- un deuxième bras comprenant deux extrémités, une première extrémité du deuxième bras étant montée pivotante par rapport à la deuxième extrémité du premier bras selon un seul axe de rotation parallèle à l'axe de l'électro-broche,
un deuxième moyen d'entraînement en rotation comprenant un moteur à arbre tournant assurant la mise en mouvement autour de cet axe, la deuxième extrémité du deuxième bras accueillant l'électro-broche, l'usinage étant réalisé par un mouvement relatif de translation de la pièce à usiner par rapport l'électro-broche positionnée et maintenue fixe par la structure cinématique dans ledit plan de positionnement,
la translation de la pièce à usiner par rapport à l'outil de l'électro-broche selon un mouvement linéaire parallèle à l'axe de l'électro-broche étant assurée par le module support de pièce à usiner ou par un module support de la platine.

Cette architecture de machine-outil est particulièrement avantageuse en ce qu'elle propose une structure articulée à deux bras pour mettre en oeuvre les mouvements de l'électro-broche selon le plan perpendiculaire à l'axe de rotation de l' électrobroche. Une structure articulée formée de deux bras pivotants est plus simple et moins onéreuse à mettre en œuvre que les structures empilées classiques.

Le seul mouvement selon un axe linéaire est celui mis en œuvre lors de la translation entre la pièce et l'outil parallèle à l'axe de l'électro-broche, ce qui correspond au mouvement dit de plongée.

Ce mouvement de plongée est mis en œuvre soit par un module de mise en mouvement associé au module porte-pièce, et alors la platine est fixe en translation, soit par un module de mise en mouvement associé à la platine et alors la pièce est fixe en translation lors des usinages.

Bien entendu, il est connu dans l'art antérieur des structures articulées multiaxes de type robot. Néanmoins, ces structures ne sont pas suffisamment précises ni rigides pour permettre leur exploitation selon les critères de précision souhaités pour l'invention. Ce manque de précision est dû à un nombre important d'articulations et à une absence de répartition de fonctions par articulation.

L'invention constitue ainsi le résultat non seulement d'une diminution du nombre d'axes de déplacement mais également d'une sélection et d'une répartition entre des axes de positionnement mis en œuvre par la structure articulée et un axe de travail mis en œuvre par le mouvement en translation. La structure cinématique proposée ne présente donc pas de mises en mouvement redondantes.

La diminution du nombre d'axes de mouvement permet d'économiser les moyens de mise en mouvement associés et de diminuer l'incertitude de positionnement.
Ce n'est pas la structure articulée qui réalise les efforts d'usinage axiaux (perçage, taraudage, etc..), mais l'axe sous la pièce ou la platine.

L'utilisation d'une structure articulée permet en outre d'agrandir la fenêtre dans laquelle un usinage peut être réalisé. De plus, une structure articulée peut réaliser des mouvements à l'extérieur de ladite fenêtre et rend plus facile une pluralité d'opérations telles :
- le changement d'outil,
- la maintenance,
- la réalisation d'un usinage dans une zone différente,
- etc...

Cette configuration de machine-outil est ouverte et sa zone d'accès est plus vaste, ce qui apporte une grande flexibilité dans :
- le positionnement du magasin d'outil,
- l'intégration du magasin d'outil,
- le positionnement du point de changement d'outil,
- le choix de la façon de changer d'outil,
- le positionnement de la platine,
- la juxtaposition de plusieurs machines-outils conformes à l'invention,
- les possibilités d'accueil d'un chariot robotisé capable d'intervenir dans la zone d'usinage ou au plus près de cette dernière et portant un outillage permettant de réaliser différentes fonctions.

Une telle configuration permet en effet de définir de nouvelles zones alors que l'électro-broche d'une machine-outil classique se déplace classiquement dans sa zone d'usinage. La structure articulée de la machine-outil de l'invention permet à l'électro-broche d'aller plus loin que la zone d'usinage.

Selon une caractéristique particulièrement avantageuse de l'invention, les positions prises par l'électro-broche se répartissent en deux zones, une zone d'usinage proprement dite et une zone de maintenabilité où l'électro-broche peut faire l'objet d'une pluralité d'opérations hors usinage, la mobilité proposée par la structure articulée permettant à l'électro-broche d'aller au-delà de la zone d'usinage.

L'ensemble des mouvements de l'électro-broche peut être protégé par une cartérisation.

Lorsque les zones d'usinage et de maintenance sont séparées en une zone d'usinage proprement dite protégée par une cartérisation et une zone de maintenabilité, l'électro-broche peut faire l'objet d'une pluralité d'opérations hors zone cartérisée. La mobilité proposée par une telle structure permet en effet à l'électro-broche disposée à l'extrémité des bras articulés d'aller au-delà de la zone cartérisée.

Selon une autre caractéristique particulièrement avantageuse, la machine-outil comprend un chariot autoguidé qui coopère avec la structure articulée. Ce chariot doit pouvoir coopérer avec la zone protégée en pénétrant partiellement dans cette dernière de façon à ce que la structure articulée puisse l'atteindre.

Le bâti fixe peut supporter deux structures articulées. De même, le ou les modules porte-pièce peuvent coopérer avec une ou deux structures articulées.

La possibilité de réalisation d'usinage dans une zone différente permet d'envisager plusieurs modules porte-pièce. Ainsi, par exemple, un deuxième module porte-pièce peut être positionné dans une autre zone d'usinage profitant du grand rayon d'action du bras articulé de la machine-outil.

Selon une autre caractéristique particulièrement avantageuse de l'invention, la platine est inclinée par exemple à quarante cinq degrés. L'architecture de la machine-outil de l'invention autorise cette orientation qui a pour avantage de faciliter la gestion des copeaux et de rendre plus compacte la machine-outil. L'inclinaison permet en outre d'équilibrer la structure, de garder le réducteur de la première articulation en pré-charge dans la zone d'usinage et d'améliorer sa performance mécanique.

Selon une autre caractéristique particulièrement avantageuse de l'invention, la platine est en liaison avec un bâti au moyen d'une interface d'accouplement à échange rapide. Ainsi, la structure formée par les bras articulés peut faire l'objet d'un échange très rapide en regard de ce qui peut être réalisé pour une structure de mise en mouvement classique. La structure de mise en mouvement composée des deux bras articulés devient ainsi grâce à l'invention un module interchangeable. Pour faciliter l'échange, les bras sont repliés. De plus, au moins l'un deux est équipé d'un anneau ou crochet de manutention. Cette détachabilité est optimisée du fait que la structure articulée limite le nombre d'axes d'articulation et présente ainsi une connectique simplifiée. La sélection des axes d'articulation et leur limitation contribuent également à l'obtention d'une structure articulée interchangeable moins lourde.

Selon une autre caractéristique particulièrement avantageuse de l'invention, l'électro-broche porte un outil de nettoyage (brossage, soufflage, aspiration) permettant de nettoyer non seulement la zone d'usinage mais également au-delà de cette zone. Ainsi, la machine-outil de l'invention est en mesure d'assurer un auto-nettoyage.

Les capacités de positionnement des bras articulés peuvent être également exploitées pour échanger le montage ou l'outillage de blocage de la ou des pièces à usiner. Il en est de même pour le module porte-pièce lui-même.

La demanderesse s'est attachée à rendre cette structure articulée suffisamment rigide et précise.

Afin de proposer la précision, la rigidité et la répétabilité se rapprochant au mieux de celles des machines-outils d'usinage à mouvements sur axes linéaires, la demanderesse a conçu une machine-outil présentant des caractéristiques allant au-delà de la sélection judicieuse des axes.

Ainsi, selon une autre caractéristique particulièrement avantageuse de l'invention, chaque axe de rotation de ladite structure articulée est équipé de deux codeurs. La présence de deux codeurs permet de détecter et de corriger la déformation de l'axe soumis à la contrainte d'usinage, aux efforts inertiels et à la gravité. Le défaut est donc pris en compte et corrigé pour chaque articulation. Pour ce faire, un codeur est associé à chaque extrémité de l'axe de l'articulation. Le module de commande de la machine outil gère ainsi deux données pour chaque articulation, gestion lui permettant de réaliser les mouvements les plus précis possibles par correction des défauts mesurés entre les deux codeurs et les consignes théoriques de position et de vitesse calculées par la commande numérique.

Selon une caractéristique particulièrement avantageuse de l'invention, les codeurs n'ont pas les mêmes fonctions, un premier codeur assure la mesure de la vitesse alors que le deuxième codeur mesure la position pour chaque axe.

Selon une autre caractéristique, les codeurs sont disposés le plus écarté possible l'un de l'autre.

Selon une autre caractéristique particulièrement avantageuse de l'invention, les axes de rotation de ladite structure articulée comprennent chacun deux paliers. La présence d'un palier de reprise systématique pour chaque axe d'articulation optimise la rigidité. Selon un mode de réalisation préféré, chaque deuxième palier dit de reprise supporte chaque deuxième codeur. Ainsi, chaque deuxième codeur se trouve positionné au plus prés d'un palier ce qui optimise la prise de mesure.

Selon une autre caractéristique de l'invention, où les moteurs comprennent chacun réducteur, un premier codeur est associé au moteur en amont du réducteur et assure la mesure de la vitesse et un deuxième codeur est associé au palier de reprise et assure la mesure de la position. Selon un mode de réalisation préféré, le premier codeur associé au moteur en amont du réducteur assure la mesure de la vitesse et celui associé à l'extrémité libre assure la mesure de la position. La mesure de position se fait sur le côté le moins mécaniquement sollicité s'affranchissant des défauts induits par l'entraînement. Le codeur représente la position réelle après déformation
Selon une autre caractéristique particulièrement avantageuse de l'invention, le deuxième codeur de mesure de la position comprend pour au moins un bras, une tige coulissant dans un fourreau permettant de prendre en compte la position angulaire de l'autre extrémité de bras et donc de tenir compte des déformations de flexion du bras dont il mesure la position. Une telle caractéristique permet d'obtenir une mesure de position la plus précise possible.

Selon une autre caractéristique particulièrement avantageuse de l'invention, l'ensemble tige et fourreau comprend en outre un ou plusieurs des capteurs suivants :
- un capteur linéaire de mesure de la flèche parallèle à l'axe de l'articulation,
- un capteur linéaire de mesure de l'élongation radiale dans la direction longitudinale du bras,
- un capteur angulaire de mesure de la torsion dudit bras.

Ces différentes prises de mesure participent à un meilleur positionnement et donc à un meilleur usinage.

L'utilisation comme base de mesure d'un ensemble mécanique formé d'une tige et d'un fourreau permet de réaliser lesdites mesures sans qu'elles soient perturbées par les différentes projections d'une zone d'usinage.

Selon une autre caractéristique particulièrement avantageuse de l'invention, les axes de rotation de ladite structure articulée sont équipés d'un moyen de mise en mouvement équipé d'un réducteur de type cycloïdal sans jeu. La transmission de mouvement en est ainsi plus précise.

Une autre caractéristique participant à la rigidité de la structure concerne le raccourcissement des bras la constituant ainsi que le surdimensionnement par rapport à la charge admissible des roulements de guidage des liaisons pivot.

Selon une autre caractéristique particulièrement avantageuse de l'invention, au moins une articulation comprend deux moteurs ou, lorsque les moteurs sont associés à des réducteurs, deux motoréducteurs.

Selon une autre caractéristique particulièrement avantageuse, la machine-outil comprend un circuit de refroidissement et/ou des radiateurs stabilisant la structure en évacuant la chaleur générée par les divers sous-ensembles la composant tels
- moteurs, réducteurs, électro-broche, axes rotatifs, etc...

Ce circuit de refroidissement permet aussi une régulation de température par rapport à des perturbations externes telles la température ambiante, le liquide de coupe, etc....

Afin d'élargir la gamme d'usinages possibles, le module support de pièce à usiner comprend un ou plusieurs axes rotatifs afin de pouvoir orienter la pièce. Ces différentes possibilités d'orientation peuvent être mises en œuvre par un plateau tournant sur un seul axe ou par un plateau tournant par rapport à un autre plateau lui-même tournant sur un autre axe perpendiculaire. De plus, ce module support peut supporter plusieurs pièces.

Par ailleurs, la présente invention comprend un procédé d'usinage de ladite machine-outil.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, plusieurs modes de réalisation d'une machine-outil d'usinage conforme à l'invention.

### BRÈVE DESCRIPTION DES DESSINS

La figure 1 est un dessin schématique d'une vue partielle en perspective extérieure d'un premier mode de réalisation de la machine-outil d'usinage de l'invention ;
La figure 2 est un dessin schématique d'une vue de face de la structure articulée support de broche de la figure 1 ;
La figure 3 est un dessin schématique d'une vue de côté de la structure articulée support de broche de la figure 1 ;
La figure 4 est un dessin schématique d'une vue en coupe avec les deux bras ramenés dans le même plan de coupe ;
La figure 5 est un dessin schématique d'une vue de l'arrière illustrant un mode de réalisation différent pour le deuxième codeur ;
La figure 6 est un dessin schématique d'une vue en perspective d'un autre mode de réalisation de la machine-outil à platine mobile et comprenant un module porte-pièce ;
La figure 6a est un dessin schématique d'une vue en perspective d'un autre mode de réalisation de la machine-outil à platine fixe et comprenant un module porte-pièce mobile ;
La figure 7 est un dessin schématique d'une vue en perspective d'un autre mode de réalisation de la machine-outil à platine mobile et comprenant deux modules porte-pièce ;
La figure 8 est un dessin schématique d'une vue de face du mode de réalisation de la figure 7 illustrant les possibilités de mouvements ;
La figure 9 est un dessin schématique d'une vue de face d'un autre mode de réalisation de la machine-outil de l'invention comprenant une cartérisation de la zone d'usinage et les possibilités de mouvements ;
La figure 10 est un dessin schématique d'une vue de face d'un autre mode de réalisation de la machine-outil de l'invention comprenant une cartérisation ;
La figure 11 est un dessin schématique d'une vue de dessus de deux machines-outils conformes à l'invention juxtaposées latéralement ;
La figure 12 est un dessin schématique d'une vue de dessus de quatre machines-outils conformes à l'invention disposées en étoile avec leur zone d'usinage comme centre ;
La figure 13 est un dessin schématique d'une vue de dessus de quatre machines-outils conformes à l'invention disposées symétriquement en opposition deux à deux en deux cellules linéaires avec la zone d'usinage disposée au centre des cellules;
La figure 14 est un dessin schématique d'une vue de dessus de quatre machines-outils conformes à l'invention disposées en opposition deux à deux en deux cellules linéaires ;
La figure 15 est un dessin schématique d'une vue de dessus de trois machines-outils conformes à l'invention disposées en cellule linéaire ;
La figure 16 est un dessin schématique du mode de réalisation de la figure 6 en version détachable ;
La figure 17 est un dessin schématique d'un autre mode de réalisation d'une machine-outil conforme à l'invention ;
La figure 18 est un dessin schématique du mode de réalisation de la figure 6 équipé d'un moyen de nettoyage ;
La figure 19 est un dessin schématique d'une vue en perspective d'un mode de réalisation d'une machine-outil conforme à l'invention ;
La figure 20 est un dessin schématique d'une vue de face illustrant les possibilités de mouvement de la structure articulée de la machine-outil de la figure 19 ;
La figure 21 est un dessin schématique d'une vue de côté en coupe avec les deux bras ramenés dans le même plan de coupe d'un autre mode de réalisation avec une articulation équipée de deux moteurs.

### DESCRIPTION DES MODES DE RÉALISATION PRÉFÉRÉS

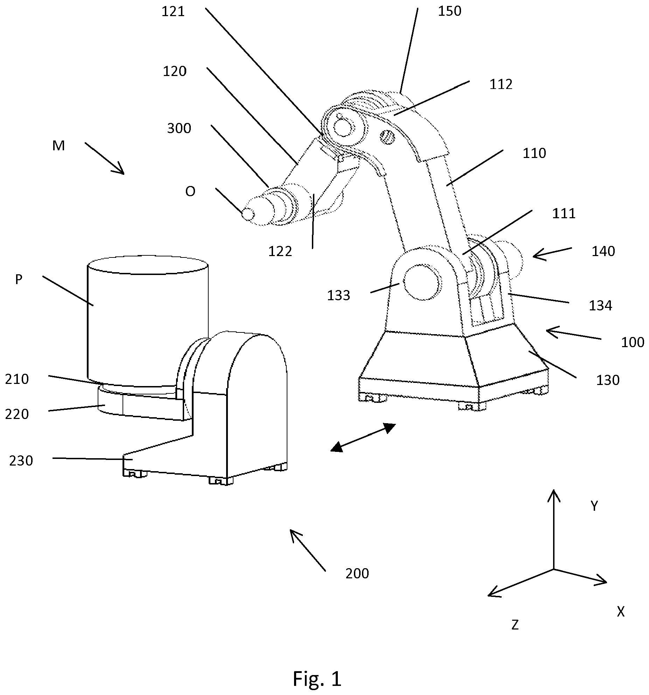

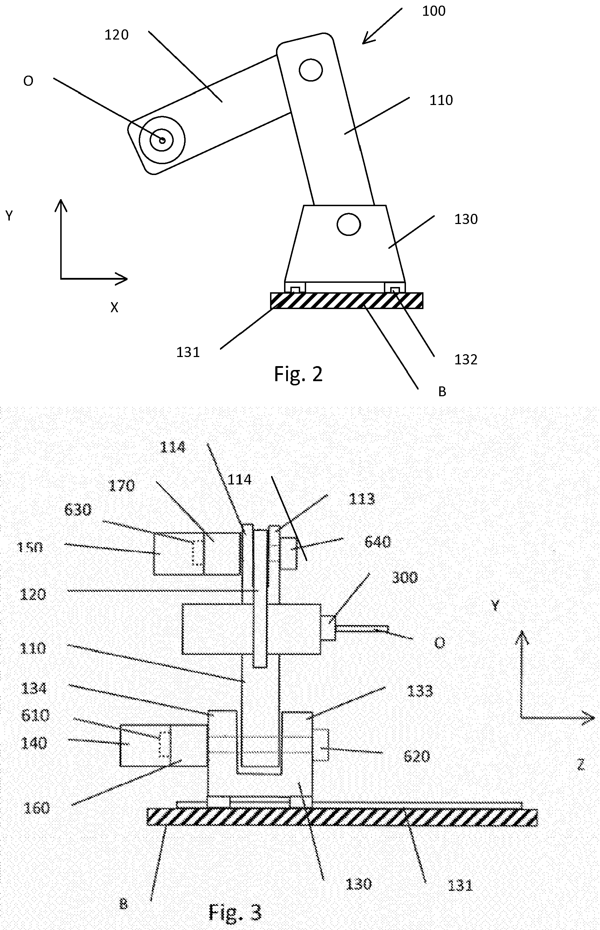

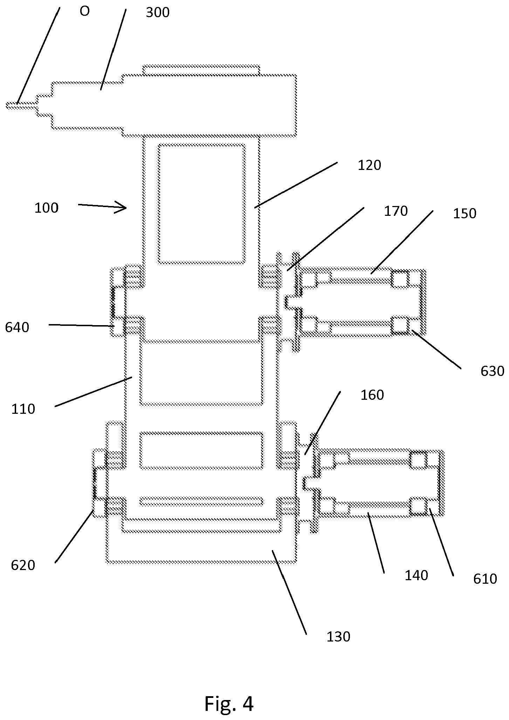

Comme illustrée sur les dessins des figures 1, 2, 3 et 4, la machine-outil d'usinage référencée M dans son ensemble comprend, agencée sur un bâti B, une structure articulée 100 porte-outil O et un module 200 porte-pièce P.

La structure articulée 100 met en mouvement une électro-broche 300 porteuse de l'outil O. L'électro-broche 300 entraîne en rotation l'outil O. L'axe de l'électro-broche 300 est parallèle à l'axe horizontal Z.
Cette structure articulée 100 est motorisée et déplace l'électro-broche 300 selon un plan perpendiculaire à l'axe de l'électro-broche 300, c'est-à-dire dans le plan vertical perpendiculaire à l'axe Z et défini par les axes X et Y.

Conformément à l'invention, ladite structure articulée 100 comprend deux bras 110 et 120.

Le premier bras 110 comprend deux extrémités 111 et 112 avec une première extrémité 111 qui est guidée en rotation par rapport à une platine 130 selon un seul axe de rotation parallèle à l'axe Z. Un premier moyen d'entraînement en rotation 140 assure la mise en mouvement dudit bras 110 autour de cet axe.

Le deuxième bras 120 comprend deux extrémités 121 et 122 avec une première extrémité 121 qui est guidée en rotation par rapport à la deuxième extrémité 112 du premier bras 110 selon un seul axe de rotation parallèle à l'axe Z. Un deuxième moyen d'entraînement en rotation 150 assure la mise en mouvement dudit bras 120 autour de cet axe.

La deuxième extrémité 122 du deuxième bras 120 accueille de manière fixe l'électro-broche 300. Conformément à l'invention, les axes de rotation de l'outil O, et d'articulation des bras 110 et 120 sont parallèles entre eux donc à l'axe Z.

La translation de la pièce à usiner P vers l'outil O de l'électro-broche 300 selon un mouvement linéaire parallèle à l'axe Z à des fins d'usinage peut être assurée de deux façons différentes.

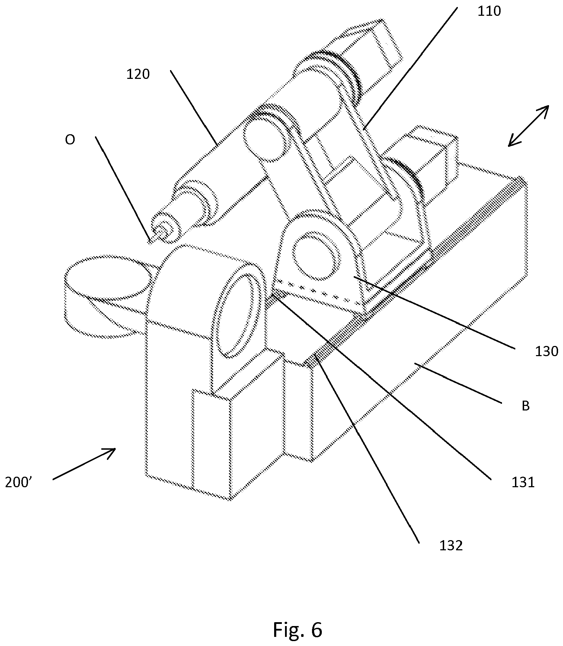

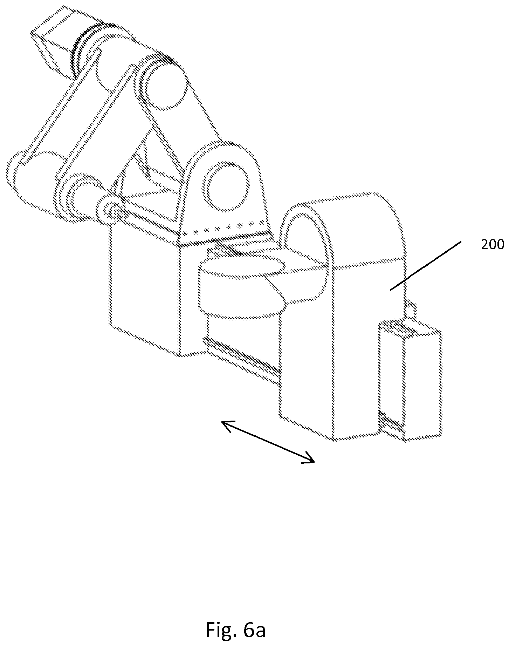

Soit comme illustrée par exemple sur le dessin de la figure 6, la platine 130 se déplace le long de rails 131 et 132 et est équipée d'un moyen de mise en mouvement (non illustré), le module 200 porte-pièce P étant fixe en translation.

Soit selon un mode de réalisation comme illustré par exemple sur le dessin de la figure 6a où c'est le module 200 porte-pièce qui se déplace le long de rails et qui est équipé d'un moyen de mise en mouvement.

La structure articulée 100 assure le déplacement de l'électro-broche 300 dans le plan vertical défini par les axes X et Y selon des mouvements de rotation selon des axes parallèles à Z et se déplace en translation selon l'axe Z afin d'amener l'outil en contact avec la pièce P pour réaliser l'usinage.

Ainsi, la structure articulée 100 illustrée ne met en œuvre que deux liaisons pivot et une liaison glissière selon l'axe de l'électro-broche 300 ce qui permet de proposer une structure rigide. Une telle structure permet notamment de réaliser avec précision toutes les opérations d'usinage en plongée en déplaçant uniquement un seul axe.

Afin d'optimiser cette rigidité, chaque axe rotatif de la structure articulée 100 est mis en œuvre avec un palier de reprise qui va mieux prendre en compte les contraintes auxquelles sont soumis lesdits axes rotatifs notamment lors du mouvement en translation de plongée selon l'axe Z. Ainsi, l'axe rotatif liant la première extrémité 111 du premier bras 110 comprend deux paliers de guidage 133 et 134 préformés dans la platine 130. De même, l'axe rotatif liant la deuxième extrémité 112 du bras 110 à la première extrémité 121 du deuxième bras 120 comprend deux paliers de guidage 113 et 114 préformés dans la deuxième extrémité 112 du premier bras 110.

Toujours à des fins d'optimisation de la rigidité, chaque axe rotatif est mis en mouvement au moyen d'un moteur (140, 150) et d'un réducteur (160, 170) du type cycloïdal sans jeu positionnés directement sur chaque axe.

En complément de cette rigidité optimisée, afin de prendre en compte les déformations dues aux contraintes subies par la structure, chaque axe rotatif est équipé de deux codeurs rotatifs 610, 620 et 630, 640. Un premier codeur rotatif 610, 630 peut être associé au bloc motoréducteur (140, 160) et (150, 170) et le deuxième 620, 640 peut être positionné comme illustré, à l'extrémité de l'axe, au niveau du palier de reprise 133, 113. L'écartement des deux codeurs rotatifs sur chaque axe optimise la précision.

Les deux codeurs pour chaque articulation n'ont pas la même fonction. Plus précisément, le premier codeur rotatif 610, 630 associé au moteur 140, 150 en amont du réducteur 160, 170 a une fonction de mesure de vitesse alors que le deuxième codeur 620, 640 positionné au niveau du palier de reprise 133, 113 a une fonction de mesure de position prenant en compte les déformations.

L'unité de commande (non illustrée) de la machine-outil M gère ainsi les informations issues de deux codeurs pour chaque axe rotatif de la structure articulée. La commande numérique associée à cette unité de commande est donc du type de celle adaptée pour les centres d'usinages contribuant au respect des critères recherchés de précision.

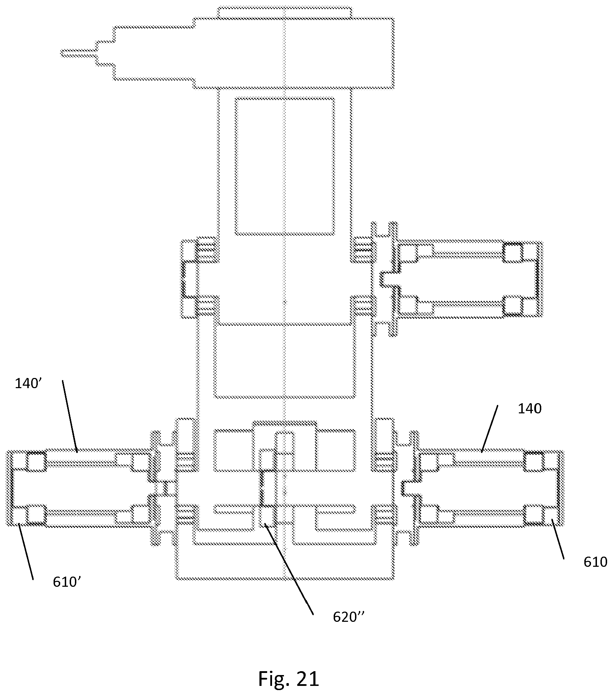

Afin de proposer un moyen de mise en mouvement adapté selon la masse des différents éléments à mettre en mouvement, une configuration où le mouvement du bras inférieur 110 à la platine 130 est assumé par deux moteurs 140 et 140' est illustré par le dessin de la figure 21. Chaque moteur 140, 140' comporte un codeur de vitesse 610, 610' disposé en amont du réducteur. Comme illustré, le codeur de position 620" est mis en commun et disposé en position centrale entre les deux paliers.

Selon un mode de réalisation non illustré, chaque liaison pivot comprend deux motoréducteurs.

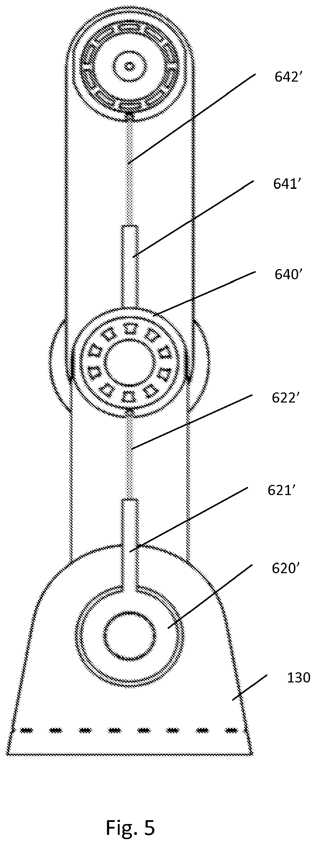

La recherche d'une prise de mesure de positionnement la plus précise possible a amené la demanderesse à imaginer un deuxième codeur susceptible de prendre en compte pour chaque articulation la flèche que pourrait prendre le bras auquel il est associé. Le mode de réalisation illustré par le dessin de la figure 5 illustre des codeurs 620' et 640' dont l'architecture prend en compte la flexion des bras.

En effet, chaque codeur 620' comprend une partie mobile tournante dont l'angle de rotation est défini par l'angle de rotation pris par l'extrémité distale du bras par rapport au codeur. Pour ce faire, la partie tournante de chaque codeur 620' et 640' forme un fourreau 621' et 641' dans lequel coulisse une tige 622' et 642' solidaire en rotation de l'extrémité distale du bras dont la position angulaire est mesurée. Ainsi, le codeur de position ne se contente pas de mesurer la position angulaire de la base du bras mais prend en compte l'éventuelle flexion dudit bras.

Afin d'optimiser la prise de mesure et conformément à l'invention, l'ensemble tige et fourreau comprend en outre un ou plusieurs des capteurs suivants :
- un capteur linéaire de mesure de la flèche parallèle à l'axe de l'articulation disposé au niveau de la liaison de la tige avec l'extrémité distale,
- un capteur linéaire de mesure de l'élongation radiale dans la direction longitudinale du bras mesurant le coulissement de la tige dans le fourreau,
- un capteur angulaire de mesure de la torsion dudit bras disposé entre le fourreau et la tige.

Selon le mode de réalisation illustré par le dessin de la figure 1, le module 200 porte-pièce P est conçu de façon à ce que la pièce P puisse être mise en mouvement de rotation selon un axe parallèle au plan Y, Z et selon un axe horizontal parallèle à l'axe X dans la position du schéma. Pour ce faire, le module porte-pièce P comporte un plateau mobile 210 support de pièce P. Ce plateau mobile 210 tourne par rapport à un plateau balancelle 220, lequel tourne selon un axe horizontal par rapport à une partie fixe 230 du module 200 porte-pièce. Ces différentes rotations élargissent la gamme d'usinages possibles en gardant les avantages de l'invention.

Le mode de réalisation illustré par le dessin de la figure 6, illustre de façon plus précise une mise en oeuvre de celui illustré par le dessin de la figure 1. Le bâti B est constitué par un parallélépipède supportant les rails 131 et 132 et à une extrémité duquel est disposé le module porte-pièce 200' qui est fixe. Comme illustrée, la structure est ouverte et l'accès est aisé sur tous les côtés. De même, l'encombrement est réduit.

Ce mode de réalisation sert de base à l'illustration des différents effets techniques offerts par une machine-outil conforme à l'invention.

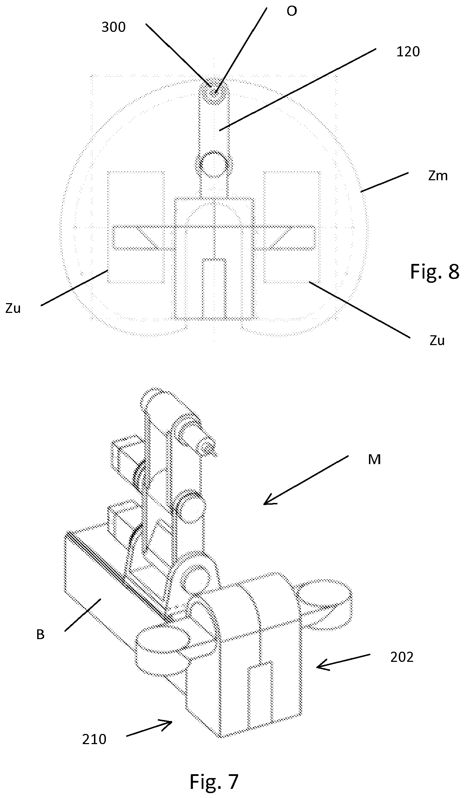

Ainsi, par exemple, le dessin de la figure 7 illustre les possibilités d'une telle machine à travailler sur deux modules porte pièce 201 et 202 juxtaposés et disposés à une même extrémité du bâti B. Ces possibilités sont offertes du fait de la structure articulée formée par les deux bras qui présente les possibilités de mouvement illustrées par le dessin de la figure 8.

Ces possibilités de mouvement se répartissent en deux zones :
- Une zone d'usinage illustrée par les deux fenêtres Zu disposées de part et d'autre du bâti B,
- une zone de maintenance illustrée par le trait référencé Zm qui englobe les deux fenêtres d'usinage.

Les fenêtres d'usinage correspondent aux positions de la broche permettant d'atteindre les critères d'usinage souhaités notamment en ce qui concerne la rigidité de la structure. La zone de maintenance Zm correspond aux positions rendues possibles par les liaisons pivots de la structure articulée et va, comme illustrée, bien au-delà des zones d'usinage Zu.

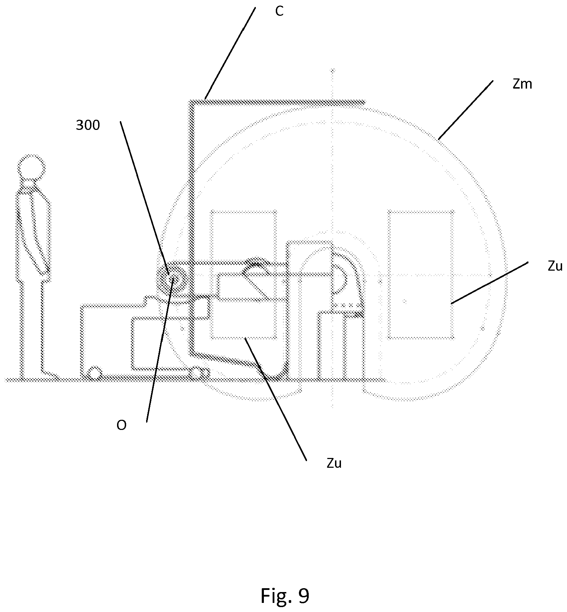

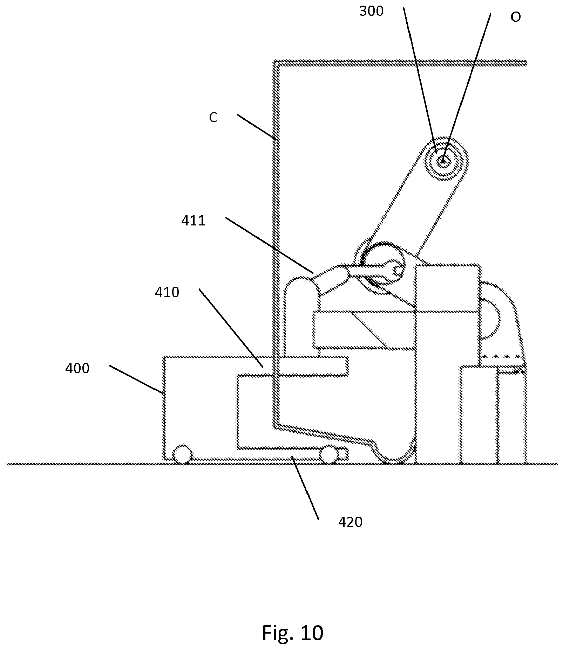

Les possibilités de positionnement offertes par la structure articulée permettent ainsi d'équiper la machine-outil M d'un carter C de protection de la zone d'usinage Zu tel celui illustré par les dessins des figures 9 et 10. Comme illustrée sur le dessin de la figure 9, l'électro-broche peut sortir du carter C pour faire l'objet d'une opération de maintenance.

Comme illustrée sur le dessin de la figure 10, la machine-outil M comprend un chariot auto guidé 400 qui pénètre partiellement dans la zone protégée par le carter C. Pour ce faire, ledit chariot 400 se présente sous la forme d'une potence 410 supportant un module fonctionnel de maintenance 411 fixée à une plateforme à roulettes 420. Afin de supporter la potence 410, ledit chariot à roulettes 420 présente une surface au sol équivalente à la projection de ladite potence. Afin d'autoriser l'extrémité de la potence 410 à pénétrer dans la zone protégée par le carter C, ce dernier est surélevé par rapport à la surface sur laquelle se déplace le chariot pour autoriser le déplacement sans obstacle dudit chariot 400. Comme illustré sur ce dessin, le module fonctionnel de maintenance peut atteindre les deux articulations de la machine-outil grâce aux possibilités de positionnement de la structure articulée.

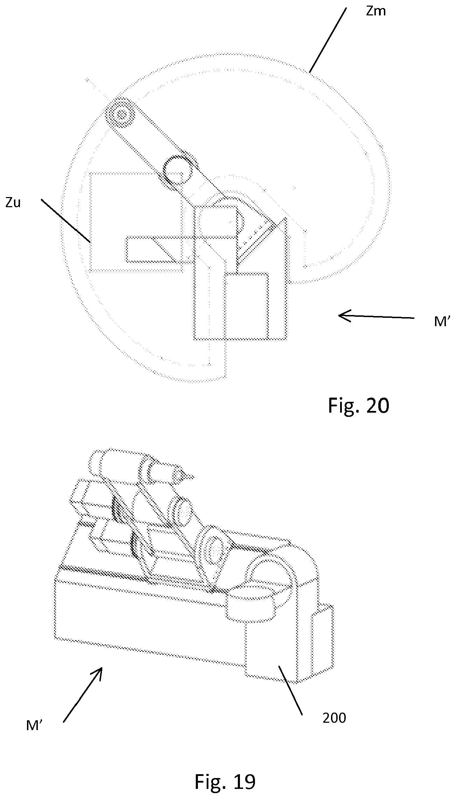

Cette flexibilité de positionnement permet également de proposer une machine outil M' où la platine 130 se déplace selon un plan incliné à 45 degrés comme illustré sur le dessin de la figure 19.

La figure 20 illustre les possibilités de mouvement d'une telle machine M' qui apportent une grande flexibilité dans les possibilités de positionnement par exemple d'un magasin d'outil.

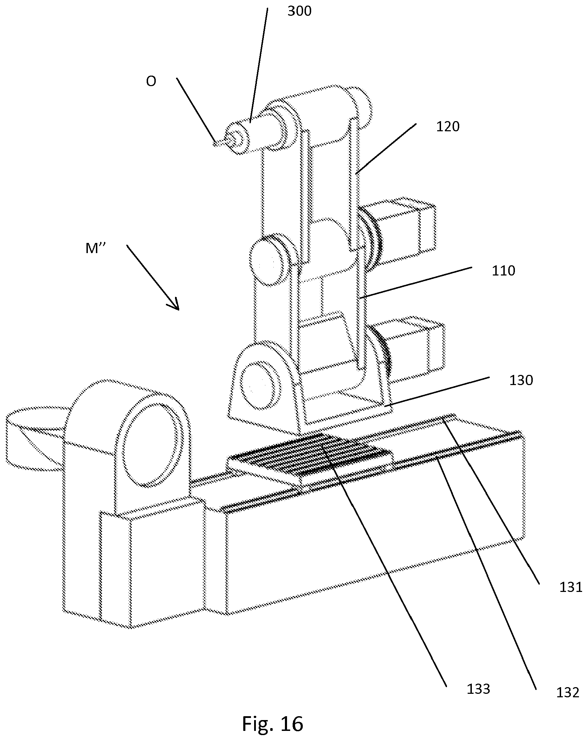

Le mode de réalisation illustré par le dessin de la figure 16 illustre une autre caractéristique de l'invention qui propose une interchangeabilité de la structure de mise en mouvement de la machine-outil M ''. Ainsi, l'ensemble formé par la platine 130, les deux bras 110 et 120 et l'électro-broche 300 est fixé de manière à faciliter son interchangeabilité à un plateau 133 coulissant sur les rails 131 et 132.

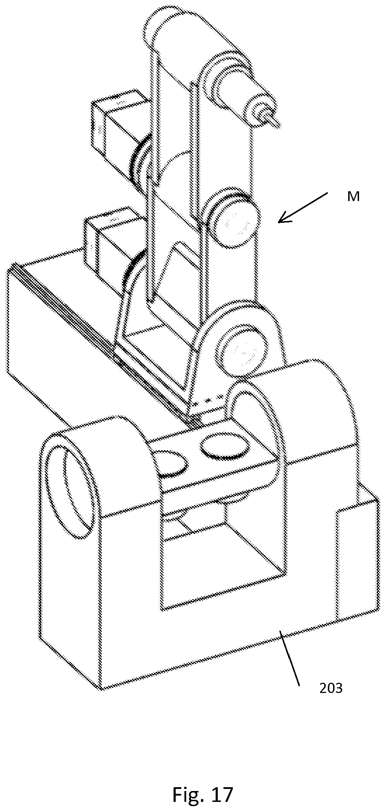

Comme illustrée sur le dessin de la figure 17, la machine outil M peut être associée à un module porte-pièce 203 de type balancelle portant plusieurs pièces.

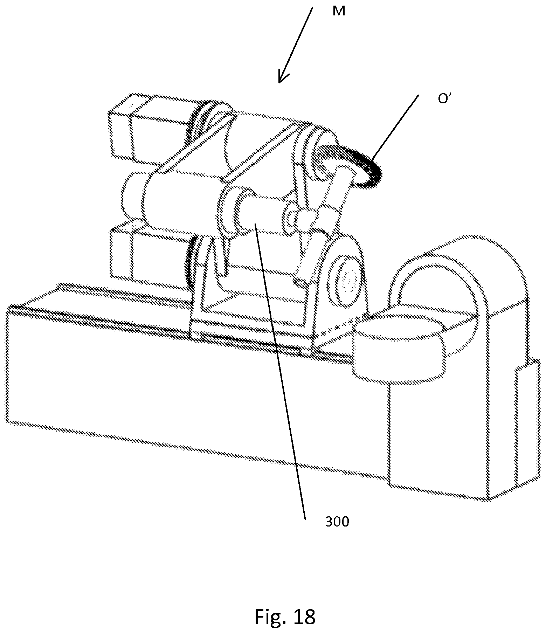

Le dessin de la figure 18 illustre une exploitation originale des possibilités de mouvements de la machine-outil M en équipant l'électro-broche 300 d'une brosse O'. Conformément aux différentes possibilités déjà exposées, la brosse O' peut assurer le nettoyage aussi bien de la zone d'usinage cartérisée que de la zone de maintenance.

L'accessibilité de la machine-outil de l'invention rend possible une pluralité de configurations lorsqu'elles doivent être associées entre elles.

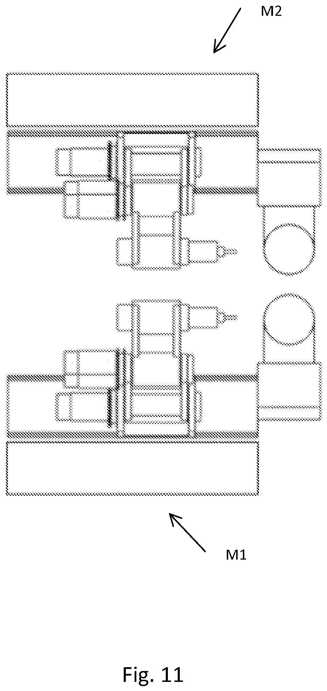

Un premier exemple d'association de deux machines-outils conformes à l'invention est illustré par le dessin de la figure 11, où les machines-outils M1 et M2 sont juxtaposées latéralement et adoptent une configuration symétrique.

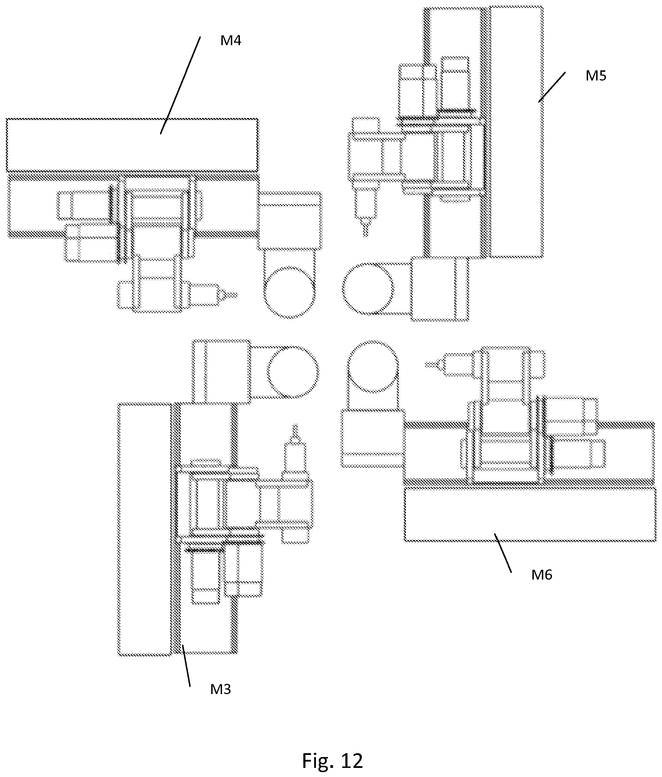

Un autre exemple d'association de quatre machines-outils conformes à l'invention est illustré par le dessin de la figure 12, où les quatre machines-outils M3, M4, M5 et M6 sont identiques et disposées en étoile à 90 degrés l'une de l'autre autour d'un centre où sont positionnés les modules porte-pièce.

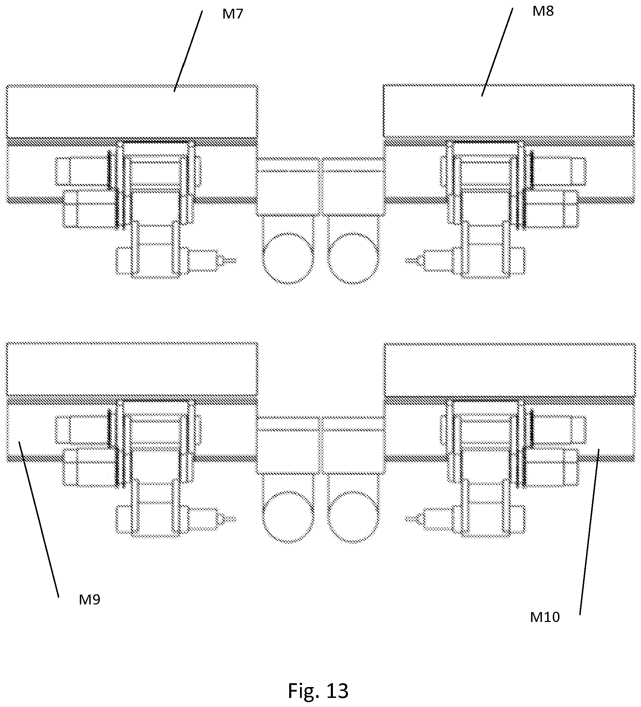

Un autre exemple d'association de quatre machines-outils conformes à l'invention est illustré par le dessin de la figure 13, où les quatre machines-outils M7, M8, M9 et M10 sont disposées symétriquement en opposition deux à deux en deux cellules linéaires avec la zone d'usinage disposée au centre de la cellule linéaire.

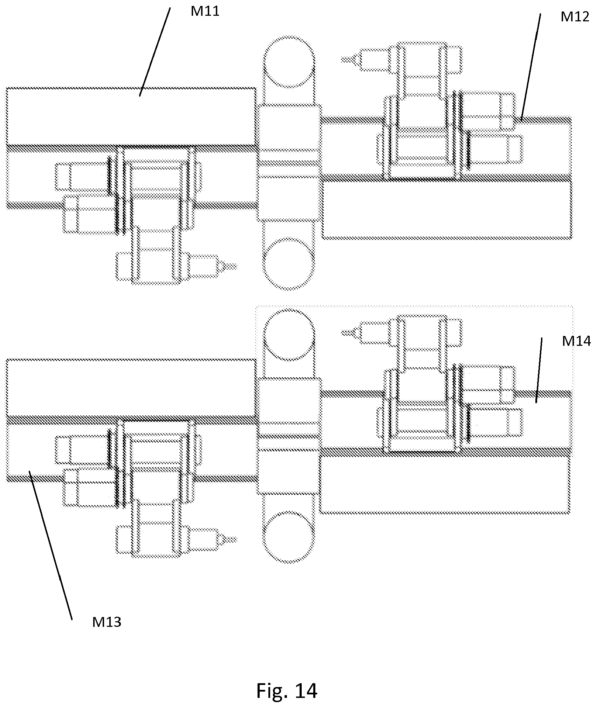

Un autre exemple d'association de quatre machines-outils conformes à l'invention est illustré par le dessin de la figure 14 où les quatre machines-outils M11, M12, M13, M14 conformes à l'invention sont disposées en opposition deux à deux en deux cellules linéaires.

Les associations précédentes ont pour but de proposer une configuration la plus compacte possible, de faciliter la maintenance et de centraliser les zones d'usinage.

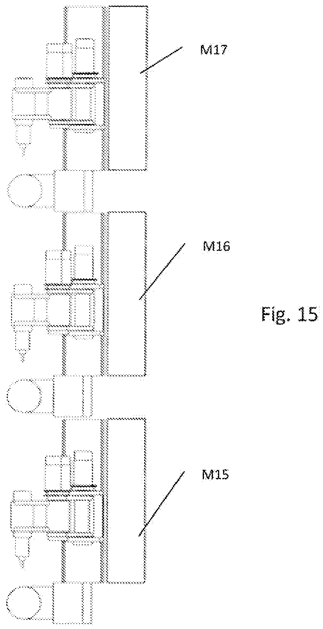

L'association en cellule linéaire alignée, des trois machines-outils M15, M16 et M17 identiques illustrées par le dessin de la figure 15 propose des zones d'usinage et des modules porte-pièce disposés du même côté de façon à faciliter l'accès et permettre par exemple une association avec un chariot autoguidé.

On comprend que la machine-outil d'usinage, qui vient d'être ci-dessus décrite et représentée, l'a été en vue d'une divulgation plutôt que d'une limitation. Bien entendu, divers aménagements, modifications et améliorations pourront être apportés aux exemples ci-dessus, sans pour autant sortir du cadre de l'invention.

Ainsi, par exemple, un magasin d'outils avec ou sans système de changeur d'outil peut compléter les modes de réalisation ci-dessus décrits.

## Revendications

1. Machine-outil d'usinage (M) comprenant une structure cinématique (100) mettant en mouvement une électro-broche (300) porteuse d'outil de coupe (O), l'outil de coupe (O) étant tournant sur l'axe de l'électro-broche (300),
la structure cinématique (100) mettant en mouvement l'électro-broche (300) selon un plan de positionnement perpendiculaire à l'axe de l'électro-broche (300),
la machine-outil (M) comprenant un module (200) support de pièce à usiner (P), ladite structure cinématique (100) positionnant l'électro-broche dans ledit plan de positionnement et étant une structure articulée comprenant deux bras articulés (110, 120) :
- un premier bras (110) comprenant deux extrémités (111, 112), une première extrémité (111) du premier bras (110) étant montée pivotante par rapport à une platine (130) selon un seul axe de rotation parallèle à l'axe de l'électro-broche (300), un premier moyen d'entraînement (140) en rotation comprenant un moteur à arbre tournant assurant la mise en mouvement autour de cet axe,
- un deuxième bras (120) comprenant deux extrémités (121, 122), une première extrémité (121) du deuxième bras (120) étant montée pivotante par rapport à la deuxième extrémité (112) du premier bras (110) selon un seul axe de rotation parallèle à l'axe de l'électro-broche (300),
un deuxième moyen d'entraînement (150) en rotation comprenant un moteur à arbre tournant assurant la mise en mouvement autour de cet axe,
la deuxième extrémité (122) du deuxième bras (120) accueillant l'électro-broche (300),
l'usinage étant réalisé par un mouvement relatif de translation de la pièce à usiner par rapport à l'électro-broche positionnée et maintenue fixe par la structure cinématique dans ledit plan de positionnement,
la translation de la pièce à usiner (P) par rapport à l'outil (O) de l'électro-broche (300) selon un mouvement linéaire parallèle à l'axe de l'électro-broche (300) étant assurée par le module (200) support de pièce (P) ou par un module support de la platine (130).

2. Machine-outil (M) selon la revendication 1, **CARACTÉRISÉE PAR LE FAIT QUE** chaque axe de rotation de ladite structure articulée (100) est équipé de deux codeurs.

3. Machine-outil (M) selon la revendication 1, **CARACTÉRISÉE PAR LE FAIT QUE** les axes de rotation de ladite structure articulée (100) comprennent chacun deux paliers.

4. Machine-outil (M) selon la revendication 1, **CARACTÉRISÉE PAR LE FAIT QUE** les axes de rotation de ladite structure articulée (100) sont équipés d'un moyen de mise en mouvement équipé d'un réducteur du type cycloïdal sans jeu.

5. Machine-outil (M) selon les revendications 2 et 3, **CARACTÉRISÉE PAR LE FAIT QUE** chaque deuxième palier dit de reprise supporte chaque deuxième codeur.

6. Machine-outil (M) selon la revendication 1, **CARACTÉRISÉE PAR LE FAIT Qu'**elle comprend un circuit de refroidissement et/ou des radiateurs stabilisant la structure en évacuant la chaleur générée par les divers sous-ensembles la composant.

7. Machine-outil (M) selon la revendication 1, **CARACTÉRISÉE PAR LE FAIT QUE** ledit module (200) support de pièce à usiner (P) comprend un ou plusieurs axes rotatifs afin de pouvoir orienter la pièce (P).

8. Machine-outil (M) selon la revendication 1, **CARACTÉRISÉE PAR LE FAIT QUE** les positions prises par l'électro-broche (300) se répartissent en deux zones, une zone d'usinage proprement dite et une zone de maintenabilité où l'électro-broche (300) peut faire l'objet d'une pluralité d'opérations hors usinage, la mobilité proposée par la structure articulée permettant à l'électro-broche (300) d'aller au-delà de la zone d'usinage.

9. Machine-outil (M) selon la revendication 1, **CARACTÉRISÉE PAR LE FAIT QUE** la platine est inclinée.

10. Machine-outil (M) selon la revendication 1, **CARACTÉRISÉE PAR LE FAIT QUE** la platine est en liaison avec un bâti au moyen d'une interface d'accouplement à échange rapide.

11. Machine-outil (M) selon la revendication 8, **CARACTÉRISÉE PAR LE FAIT QUE** l'électro-broche porte un outil de nettoyage permettant de nettoyer non seulement la zone d'usinage mais également au-delà de cette zone.

12. Machine-outil (M) selon la revendication 2, **CARACTÉRISÉE PAR LE FAIT QUE** les codeurs n'ont pas les mêmes fonctions, un premier codeur assure la mesure de la vitesse alors que le deuxième codeur mesure la position pour chaque axe.

13. Machine-outil (M) selon la revendication 12 où les moteurs comprennent chacun un réducteur, **CARACTÉRISÉE PAR LE FAIT QUE** un premier codeur est associé au moteur en amont du réducteur et assure la mesure de la vitesse et un deuxième codeur est associé au palier de reprise et assure la mesure de la position.

14. Machine-outil (M) selon la revendication 13, **CARACTÉRISÉE PAR LE FAIT QUE** le deuxième codeur de mesure de la position comprend pour au moins un bras, une tige coulissant dans un fourreau permettant de mesurer la position angulaire de l'autre extrémité de bras et donc de prendre en compte les déformations de flexion du bras dont il mesure la position.

15. Machine-outil (M) selon la revendication 16, **CARACTÉRISÉE PAR LE FAIT QUE** l'ensemble tige et fourreau comprend en outre un ou plusieurs des capteurs suivants :
- un capteur linéaire de mesure de la flèche parallèle à l'axe de l'articulation,
- un capteur linéaire de mesure de l'élongation radiale dans la direction longitudinale du bras,
- un capteur angulaire de mesure de la torsion dudit bras.

16. Machine-outil (M) selon les revendications 1, **CARACTÉRISÉE PAR LE FAIT QU'**au moins une articulation comprend deux moteurs.

17. Machine-outil selon la revendication 1, **CARACTÉRISÉE PAR LE FAIT Qu'**elle comprend un chariot autoguidé venant coopérer avec la structure articulée.

18. Procédé d'usinage de la machine-outil selon l'une quelconque des revendications 1 à 17, consistant à répartir les axes de déplacement entre des axes de positionnement mis en œuvre par la structure articulée et un axe de travail mis en œuvre par le mouvement en translation et à réaliser l'usinage par un mouvement relatif de translation de la pièce à usiner par rapport à l'électro-broche positionnée et maintenue fixe par la structure cinématique dans ledit plan de positionnement.

## Patentansprüche

1. Bearbeitungswerkzeugmaschine (M), umfassend eine kinematische Struktur (100), die eine Elektrospindel (300), die das Schneidwerkzeug (O) trägt, in Bewegung setzt, wobei das Schneidwerkzeug (O) um die Achse der Elektrospindel (300) drehbar ist,
wobei die kinematische Struktur (100) die Elektrospindel (300) in einer Positionierebene in Bewegung setzt, die senkrecht zur Achse der Elektrospindel (300) ist, wobei die Werkzeugmaschine (M) ein Modul (200) zum Halten des Werkstücks (P) aufweist,
wobei die kinematische Struktur (100) die Elektrospindel in der Positionierebene positioniert und eine Gelenkstruktur ist, die zwei Gelenkarme (110, 120) aufweist,
- einen ersten Arm (110), der zwei Enden (111, 112) aufweist, wobei ein erstes Ende (111) des ersten Arms (110) schwenkbar in Bezug auf eine Platte (130) um eine einzige Drehachse angebracht ist, die parallel zur Achse der Elektrospindel (300) ist, wobei ein erstes Drehantriebsmittel (140) einen Drehwellenmotor aufweist, der das In-Bewegung-Setzen um diese Achse garantiert,
- einen zweiten Arm (120), der zwei Enden (121, 122) aufweist, wobei ein erstes Ende (121) des zweiten Arms (120) schwenkbar in Bezug auf das zweite Ende (112) des ersten Arms (110) um eine einzige Drehachse angebracht ist, die parallel zur Achse der Elektrospindel (300) ist,
wobei ein zweites Drehantriebsmittel (150) einen Drehwellenmotor aufweist, der das In-Bewegung-Setzen um diese Achse garantiert,
wobei das zweite Ende (122) des zweiten Arms (120) die Elektrospindel (300) aufnimmt,
wobei das Bearbeiten durch eine relative Translationsbewegung des Werkstücks in Bezug auf die Elektrospindel durchgeführt wird, die durch die kinematische Struktur in der Positionierebene positioniert ist und festgehalten wird,
wobei die Translation des Werkstückes (P) in Bezug auf das Werkzeug (O) der Elektrospindel (300) in einer linearen Bewegung, die parallel zur Achse der Elektrospindel (300) ist, durch das Modul (200) zum Halten des Werkstücks (P) oder ein Modul zum Tragen der Platte (130) gewährleistet wird.

2. Werkzeugmaschine (M) nach Anspruch 1, **DADURCH GEKENNZEICHNET, DASS** jede Drehachse der Gelenkstruktur (100) mit zwei Codierern ausgestattet ist.

3. Werkzeugmaschine (M) nach Anspruch 1, **DADURCH GEKENNZEICHNET, DASS** die Drehachsen der Gelenkstruktur (100) jeweils zwei Lager aufweisen.

4. Werkzeugmaschine (M) nach Anspruch 1, **DADURCH GEKENNZEICHNET, DASS** die Drehachsen der Gelenkstruktur (100) mit einem Mittel zum In-Bewegung-Setzen ausgestattet sind, das mit einem Getriebe des Typs des Zykloidgetriebes ohne Spiel ausgestattet ist.

5. Werkzeugmaschine (M) nach Anspruch 2 und 3, **DADURCH GEKENNZEICHNET, DASS** jedes zweite Wiederaufnahme-Lager jeden zweiten Codierer trägt.

6. Werkzeugmaschine (M) nach Anspruch 1, **DADURCH GEKENNZEICHNET, DASS** sie einen Kühlkreislauf und/oder Kühlkörper aufweist, die die Struktur stabilisieren, indem die Wärme abgeführt wird, die von den verschiedenen Unterbaugruppen erzeugt wird, aus denen sie besteht.

7. Werkzeugmaschine (M) nach Anspruch 1, **DADURCH GEKENNZEICHNET, DASS** das Modul (200) zum Halten des Werkstücks (P) eine oder mehrere Drehachsen aufweist, um das Werkstück (P) ausrichten zu können.

8. Werkzeugmaschine (M) nach Anspruch 1, **DADURCH GEKENNZEICHNET, DASS** die Positionen, die von der Elektrospindel (300) eingenommen werden, in zwei Bereiche unterteilt sind, einen eigentlichen Bearbeitungsbereich und einen Bereich der Wartbarkeit, in dem die Elektrospindel (300) mehreren Vorgängen unterzogen werden kann, die nichts mit der Bearbeitung zu tun haben, wobei die vorgeschlagene Beweglichkeit der Gelenkstruktur der Elektrospindel (300) ermöglicht, über den Bearbeitungsbereich hinauszugehen.

9. Werkzeugmaschine (M) nach Anspruch 1, **DADURCH GEKENNZEICHNET, DASS** die Platte geneigt ist.

10. Werkzeugmaschine (M) nach Anspruch 1, **DADURCH GEKENNZEICHNET, DASS** die Platte über eine Schnellaustausch-Kupplungsschnittstelle mit einem Gestell in Verbindung steht.

11. Werkzeugmaschine (M) nach Anspruch 8, **DADURCH GEKENNZEICHNET, DASS** die Elektrospindel ein Reinigungswerkzeug trägt, das ermöglicht, nicht nur den Bearbeitungsbereich, sondern auch über diesen Bereich hinaus zu reinigen.

12. Werkzeugmaschine (M) nach Anspruch 2, **DADURCH GEKENNZEICHNET, DASS** die Codierer nicht die gleichen Funktionen aufweisen, ein erster Codierer das Messen der Drehzahl gewährleistet, während der zweite Codierer die Position für jede Achse misst.

13. Werkzeugmaschine (M) nach Anspruch 12, wobei die Motoren jeweils ein Getriebe aufweisen, **DADURCH GEKENNZEICHNET, DASS** ein erster Codierer mit dem Motor vorgelagert vor dem Getriebe verbunden ist und das Messen der Drehzahl gewährleistet und ein zweiter Codierer mit dem Wiederaufnahme-Lager verbunden ist und das Messen der Position gewährleistet.

14. Werkzeugmaschine (M) nach Anspruch 13, **DADURCH GEKENNZEICHNET, DASS** der zweite Codierer zum Messen der Position für mindestens einen Arm eine Stange aufweist, die in einer Hülse gleitet, die ermöglicht, die Winkelposition des anderen Endes des Arms zu messen und somit die Biegeverformungen des Arms zu berücksichtigen, dessen Position er misst.

15. Werkzeugmaschine (M) nach Anspruch 16, **DADURCH GEKENNZEICHNET, DASS** die Stangen-Hülse-Anordnung ferner einen oder mehrere der folgenden Sensoren aufweist:
- einen linearen Sensor zum Messen der Durchbiegung, die parallel zur Gelenkachse ist,
- einen linearen Sensor zum Messen der radialen Dehnung in Längsrichtung des Arms,
- einen Winkelsensor zum Messen der Verdrehung des Arms.

16. Werkzeugmaschine (M) nach Anspruch 1, **DADURCH GEKENNZEICHNET, DASS** mindestens ein Gelenk zwei Motoren aufweist.

17. Werkzeugmaschine nach Anspruch 1, **DADURCH GEKENNZEICHNET, DASS** sie einen selbstgesteuerten Schlitten aufweist, der mit der Gelenkstruktur zusammenwirkt.

18. Bearbeitungsverfahren der Werkzeugmaschine nach einem der Ansprüche 1 bis 17, das darin besteht, die Bewegungsachsen unter den Positionierachsen, die von der Gelenkstruktur umgesetzt werden, und einer Arbeitsachse, die von der Translationsbewegung umgesetzt wird, zu unterteilen und das Bearbeiten durch eine relative Translationsbewegung des Werkstücks in Bezug auf die Elektrospindel durchzuführen, die durch die kinematische Struktur in der Positionierebene positioniert und festgehalten wird.

## Claims

1. A machine tool (M) comprising a kinematic structure (100) that moves an electric spindle (300) carrying a cutting tool (O), the cutting tool (O) being rotated on the axis of the electric spindle (300),
the kinematic structure (100) moving the electric spindle (300) in a positioning plane perpendicular to the axis of the electric spindle (300), the machine tool (M) comprising a workpiece (P) support module (200),
said kinematic structure (100) positioning the electric spindle in said positioning plane and being an articulated structure comprising two articulated arms (110, 120):
- a first arm (110) having two ends (111, 112), a first end (111) of the first arm (110) being pivotally mounted in relation to a plate (130) about a single axis of rotation parallel to the axis of the electric spindle (300), a first rotary drive means (140) comprising a motor with a rotating shaft ensuring the movement about this axis,
- a second arm (120) having two ends (121, 122), a first end (121) of the second arm (120) being pivotally mounted in relation to the second end (112) of the first arm (110) about a single axis of rotation parallel to the axis of the electric spindle (300),
a second rotary drive means (150) comprising a motor with a rotating shaft ensuring the movement about this axis,
the second end (122) of the second arm (120) receiving the electric spindle (300),
the machining taking place by a relative translational movement of the workpiece in relation to the electric spindle positioned and held fixed by the kinematic structure in said positioning plane,
the translational movement of the workpiece (P) in relation to the tool (O) of the electric spindle (300) in a linear movement parallel to the axis of the electric spindle (300) being provided by the workpiece (P) support module (200) or by a plate support module (130).

2. The machine tool (M) according to claim 1, **CHARACTERIZED IN THAT** each axis of rotation of said articulated structure (100) is equipped with two encoders.

3. The machine tool (M) according to claim 1, **CHARACTERIZED IN THAT** the axes of rotation of said articulated structure (100) each comprise two bearings.

4. The machine tool (M) according to claim 1, **CHARACTERIZED IN THAT** the axes of rotation of said articulated structure (100) are equipped with a motion means having a cycloidal type reducer without backlash.

5. The machine tool (M) according to claims 2 and 3, **CHARACTERIZED IN THAT** each second bearing, referred to as a regaining bearing, supports each second encoder.

6. The machine tool (M) according to claim 1, **CHARACTERIZED IN THAT** it comprises a cooling circuit and / or radiators stabilizing the structure by evacuating the heat generated by the various subassemblies of which it is composed.

7. The machine tool (M) according to claim 1, **CHARACTERIZED IN THAT** said workpiece (P) support module (200) comprises one or more rotary axes for orienting the workpiece (P).

8. The machine tool (M) according to claim 1, **CHARACTERIZED IN THAT** the positions adopted by the electric spindle (300) are divided into two zones, a machining zone proper and a maintenance zone where the electric spindle (300) may be subjected to a plurality of operations when not machining, the mobility provided by the articulated structure allowing the electric spindle (300) to go beyond the machining zone.

9. The machine tool (M) according to claim 1, **CHARACTERIZED IN THAT** the plate is inclined.

10. The machine tool (M) according to claim 1, **CHARACTERIZED IN THAT** the plate is connected to a frame by means of a quick-change coupling interface.

11. The machine tool (M) according to claim 8, **CHARACTERIZED IN THAT** the electric spindle carries a cleaning tool making it possible to clean not only the machining zone but also a zone situated beyond this zone.

12. The machine tool (M) according to claim 2, **CHARACTERIZED IN THAT** the encoders do not have the same functions, a first encoder being used to measure the speed while the second encoder measures the position for each axis.

13. The machine tool (M) according to claim 12 wherein the motors each comprise a reducer, **CHARACTERIZED IN THAT** a first encoder is associated with the motor upstream from the reduction gear and provides for speed measurement and a second encoder is associated with the regaining bearing and provides for position measurement.

14. The machine tool (M) according to claim 13, **CHARACTERIZED IN THAT** the second encoder for measuring the position comprises, for at least one arm, a rod sliding in a sleeve for measuring the angular position of the other end of the arm and therefore to take into account the flexural deformations of the arm of which it is measuring the position.

15. The machine tool (M) according to claim 16, **CHARACTERIZED IN THAT** the rod and sleeve assembly further comprises one or more of the following sensors:
- a linear sensor for measuring the deflection parallel to the axis of the articulation,
- a linear sensor for measuring the radial elongation in the longitudinal direction of the arm,
- an angular sensor for measuring the torsion of said arm.

16. The machine tool (M) according to claim 1, **CHARACTERIZED IN THAT** at least one articulation comprises two motors.

17. The machine tool according to claim 1, **CHARACTERIZED IN THAT** it comprises a self-guided slide which cooperates with the articulated structure.

18. A method of machining by the machine tool according to any one of claims 1 to 17, consisting in distributing the axes of movement between positioning axes implemented by the articulated structure and a working axis implemented by the translational movement and performing the machining by a relative translational movement of the workpiece with respect to the electric spindle positioned and held fixed by the kinematic structure in said positioning plane.
